# EUROPEAN PATENT SPECIFICATION

(11) **EP 1 787 702 B1**
(45) Date of publication and mention of the grant of the patent: **13.04.2016**
(21) Application number: 06022940.8
(22) Date of filing: 03.11.2006
(51) Int. Cl.: B01D 46/24

(54) **Honeycomb structured body**
Wabenstrukturkörper
Corps à structure en nid d'abeilles

(30) Priority: 18.11.2005 JP 2005334781; 24.08.2006 WO PCT/JP2006/316633
(43) Date of publication of application: 23.05.2007
(73) Proprietor: Ibiden Co., Ltd., Ogaki-shi Gifu 503-8604 (JP)
(72) Inventor: Sakaguchi, Hiroshi, Ibi-gun Gifu 501-0695 (JP); Ohno, Kazushige, Ibi-gun Gifu 501-0695 (JP)
(74) Representative: Hoffmann Eitle

(56) References cited:
- EP-A1- 1 493 479
- EP-A1- 1 537 914
- EP-A2- 1 384 507
- JP-A- 55 155 741
- US-A1- 2004 142 145

## Description

### TECHNICAL FIELD

The present invention relates to a honeycomb structured body to be used as a filter that captures and removes particulate matters (fine particulate material, hereinafter referred to as PM) in exhaust gases discharged from an internal combustion engine such as a diesel engine, or as a catalyst supporting carrier that converts a toxic gas component contained in exhaust gases, and the like.

### BACKGROUND ART

Recently, PM such as soot, contained in exhaust gases that are discharged from internal combustion engines for vehicles such as a bus, a truck, construction equipment and the like, have raised problems as contaminants harmful to the environment and the human body.

In order to solve those problems, there have been proposed various applications in which a honeycomb structured body, which comprises a honeycomb unit comprising a plurality of cells longitudinally placed in parallel with one other with a cell wall therebetween, is used as filters for capturing PM in exhaust gases to purify the exhaust gases.

As materials for a conventional honeycomb unit, porous silicon carbide, cordierite or the like is known.

As for examples of the conventionally known honeycomb structured body of this kind, a honeycomb structured body in which each corner portion of all cells are provided with a reinforcing member in order to secure strength against thermal stress (for example, see Patent Documents 1 and 2), andahoneycomb structured body in which the thickness of cell walls and the size of each cell are enlarged to secure strength for a backwashing process and also to avoid bridging of PM during the backwashing (for example, see Patent Document 3) has been disclosed.

Moreover, a honeycomb structured body in which each corner portion of only the cells located at the outer area are provided with a reinforcing member (for example, see Patent Document 4) has been disclosed.

Furthermore, a honeycomb structured body in which the thickness of the outer edge wall is increased and the thickness of part of or all of the cell walls is made smaller gradually from the point contacting with the outer edge wall to the inner side (see, for example, Patent Document 5) has been disclosed.

Patent Document 1: JP-A 9-299731
Patent Document 2: JP-A 49-113789
Patent Document 3: JP-A 2-146212
Patent Document 4: JP-A 10-264125
Patent Document 5: JP-A 2003-10616

US2004/0142145 discloses in figure 1 and 4 a honeycomb structured body in which a plurality of porous ceramic members are combined with one another by interposing an adhesive layer, each of the porous ceramic members having a plurality of cells placed in parallel with one another in a longitudinal direction with a cell wall there between and an outer edge wall on the outer edge surface thereof, the thickness of said outer edge wall of said porous ceramic member being greater than the thickness of said cell wall (figure 5). In a further embodiment, the document discloses in figure 7 that the outermost cells have a thicker contact point between the outer wall and the partition wall (see also column 3, §0029). The document wants to solve the problem of resistance to thermal stress while maintaining a low pressure drop.

### DISCLOSURE OF THE INVENTION

### PROBLEMS TO BE SOLVED BY THE INVENTION

A honeycomb structured body is required to have a low pressure loss as its basic characteristics. Effective means to reduce pressure loss include increasing porosity, increasing aperture ratio, and the like. However, a higher porosity, for example, presumably causes deterioration of strength, and in a case where the porosity is raised, while a reinforcing member is provided at cell walls of all the cells, with the thickness of the cell walls being unchanged, for the purpose of securing the strength of the honeycomb structured body as mentioned above, there is aproblemof a reduced aperture ratio, causing an increase in the pressure loss.

Moreover, when the reinforcing members are provided while securing the aperture ratio so as to avoid an increase in the pressure loss, the thickness of the cell walls needs to be reduced, and in such a case, it becomes difficult to secure the strength of the honeycomb structured body.

As mentioned above, it has been difficult to simultaneously ensure the suppression of the pressure loss at a low level and the securing of the strength, which are the characteristics contradictory to each another.

### MEANS FOR SOLVING THE PROBLEMS

The present inventors have studied hard to solve the above-mentioned problems, and found that, with regard to a porous ceramic member constituting a honeycomb structured body, by keeping the porosity and the aperture ratio of the porous ceramic member in a desired range and increasing the thickness of the outer edge walls, as well as by providing corners of outermost cells with a filling body that fills in the corners, it becomes possible to suppress the pressure loss and at the same time to secure the strength.

A honeycomb structured body of the present invention is a honeycomb structured body in which
a plurality of porous ceramic members are combined with one another by interposing an adhesive layer, each of the porous ceramic members having a plurality of cells placed in parallel with one another in a longitudinal direction with a cell wall therebetween and an outer edge wall on the outer edge surface thereof,
the thickness of the outer edge wall of the porous ceramic member being greater than the thickness of the cell wall, wherein each of the porous ceramic members has a filling body which is provided so as to fill in at least one corner portion of at least one outermost cell of the porous ceramic members.

In the above-mentioned honeycomb structured body, the filling body is provided at a corner portion constituted by the outer edge wall and a corner portion constituted by the outer edge wall and the cell wall, and a cross-sectional shape of the outermost cells at the face orthogonal to the longitudinal direction of the cells is desirably an almost tetragon, and a cross-sectional shape of the filling body at the face orthogonal to the longitudinal direction of the cells is desirably an almost right triangle or a shape of an almost right triangle in which the hypotenuse is curved or bent toward the inside or outside of the cell.

The porosity of the porous ceramic members is desirably set to 45 to 55%, and the aperture ratio of the cells at the cross-section perpendicular to the longitudinal direction of each of the porous ceramic members is desirably set to 60 to 75%.

In the honeycomb structured body, desirably either one of the both end portions of the cell is sealed.

### EFFECTS OF THE INVENTION

When an external force is applied to a conventional honeycomb structured body, presumably stress is focused on corner portions of cells, and cracks occur from this focal point of stress. On the other hand, in the honeycomb structured body of the present invention, since the thickness of the outer edge wall is greater than the thickness of the cell wall, and a filling body is provided so as to fill in at least one corner portion of at least one outermost cell, it is presumed that stress is not focused on the corner portion and thus cracks hardly occur. Moreover, the filling body at the corner portion also functions as a reinforcing body to reinforce the cell walls, with the result that deformation of the cell walls is avoided to reduce the occurrence of cracks even when an external stress is applied to the porous ceramic members. Furthermore, in a known honeycomb structured body, when the porosity or the aperture ratio of the porous ceramic members are increased, or the thickness of the cell wall is made smaller, for the purpose of reducing pressure loss, strength of the cell wall is deteriorated. However, in accordance with the honeycomb structured body of the present invention, the occurrence of cracks can be reduced even when the porosity and the aperture ratio are increased or the thickness of the cell wall is made smaller, and as a result, the pressure loss can be kept at a low level, the strength can be secured, and occurrence of damage such as cracks can be avoided. In addition, the occurrence of damage such as chips caused due to grasp by machine in the manufacturing process or contact between the ceramic members can be avoided.

### BEST MODE FOR CARRYING OUT THE INVENTION

The honeycomb structured body of the present invention is a honeycomb structured body with the features of claim 1.

Referring to the figures, the honeycombs structured body of the present invention will be described below.

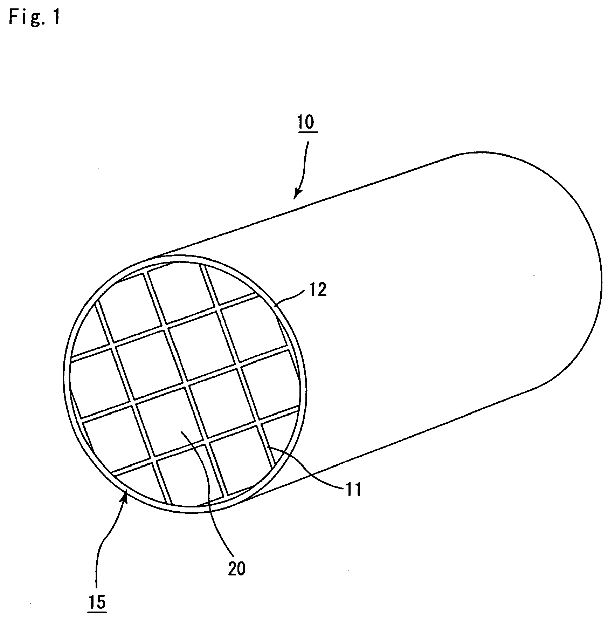

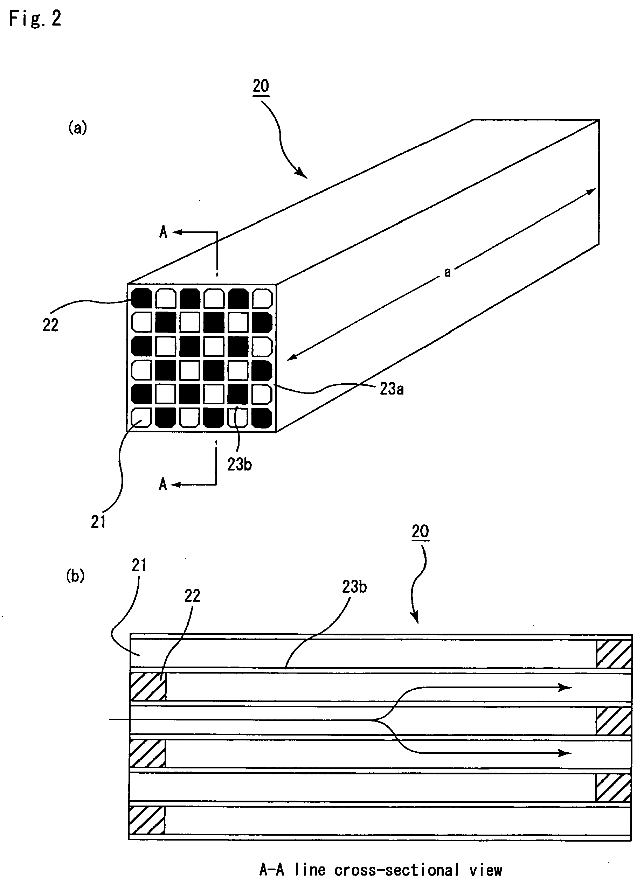

Fig. 1 is a perspective view that schematically shows one example of the honeycomb structured body of the present invention; Fig. 2 (a) is a perspective view showing one example of a porous ceramic member which constitutes the honeycomb structured body shown in Fig. 1, and Fig. 2 (b) is across-sectional view taken along line A-A of the porous ceramic member shown in Fig. 2(a).

As shown in Fig. 1, in a honeycomb structured body 10, a plurality of porous ceramic members 20 comprising silicon carbide based ceramics and the like are combined with one another by interposing a sealing material layer (adhesive layer) 11 to form a cylindrical ceramic block 15, and a sealing material layer (coating layer) 12 is formed on the periphery of the ceramic block 15.

With respect to the honeycomb structured body 10 shown in Fig. 1, although the shape of the ceramic block is a cylindrical shape, the shape of the ceramic block of the present invention is not limited to the cylindrical shape as long as it has a shape of a pillar, and may be, for example, a cylindroid shape, a rectangular pillar shape or the like, and also may be any other shape.

As shown in Figs. 2(a) and 2(b), in the porous ceramic member 20, a honeycomb unit comprises a plurality of cells 21 placed in parallel with one another in the longitudinal direction (the direction shown by an arrow a in Fig. 2(a)) with a cell wall 23b therebetween as well as a outer edge wall 23a formed on the outer edge surface, and in this honeycomb unit, either of the end portions of the cells 21 is sealed with a plug 22 so that cell walls 23b that separate the cells 21 are allowed to function as filters. In other words, each of the cells 21 formed in the porous ceramic member 20 has either one of the end portions on the inlet side or the outlet side of exhaust gases sealed with the plug 22 as shown in Fig. 2 (b) so that exhaust gases that have flowed into one of the cells 21 are allowed to flow out of another cell 21 after surely having passed through a cell wall 23b that separates the cells 21.

In the porous ceramic member 20, the aperture ratio of the cells at a cross-section perpendicular to the longitudinal direction is desirably set to 60 to 75%.

The aperture ratio of less than 60% may increase the pressure loss in the honeycomb structured body, whereas the aperture ratio exceeding 75% may deteriorate the strength, and in the case where the strength is deteriorated, cracks are likely to occur in the porous ceramic member constituting the honeycomb structured body. The more desirable lower limit value is 65%.

The aperture ratio of the cells used here means the ratio occupied by cells in a cross-section perpendicular to the longitudinal direction of the porous ceramic member 20. The above-mentioned perpendicular cross-section refers to a cross-section that is not sealed by a plug.

In the porous ceramic member, the lower limit of the porosity is desirably set to 45%, and the upper limit thereof is desirably set to 55%.

The porosity of less than 45% may increase the pressure loss, whereas the porosity exceeding 55% may deteriorate the strength. The more desirable lower limit is 47% and the more desirable upper limit is 53%.

Here, the porosity can be measured through known methods such as a mercury injection method, Archimedes method and a measuring method using a scanning electron microscope (SEM).

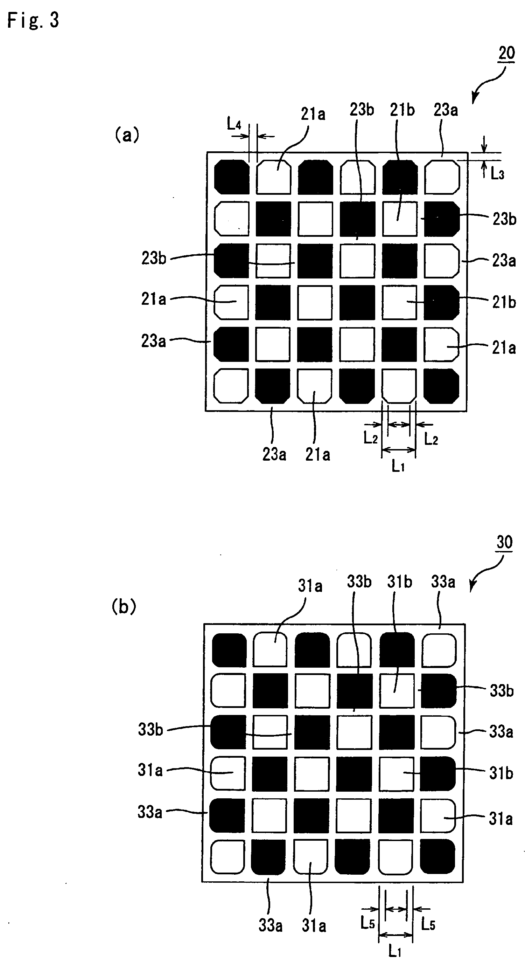

Moreover, in the porous ceramic member 20, the thickness (L₃ in Fig. 3 (a)) of a outer edge wall 23a constituting the outer edge surface is greater than the thickness (L₄ in Fig. 3(a)) of a cell wall 23b in a cross-section perpendicular to the longitudinal direction.

By forming into a structure of this kind, the porosity and the aperture ratio are maintained so that the pressure loss can be kept low, and also the strength can be secured.

Here, the thickness L₃ of the outer edge wall 23a is desirably 1.3 to 3.0 times the thickness L₄ of the cell wall 23b.

When the value is less than 1.3 times, there may be the case where the effect of securing the strength is not obtained, and when the value exceeds 3. 0 times, the thickness of the cell wall 23b needs to be made smaller to secure the aperture ratio, with the result that damage such as cracks tends to occur in the cell wall 23b.

The lower limit of the thickness L₄ of the cell wall 23b is desirably set to 0.1 mm and the upper limit thereof is desirably set to 0.4 mm.

In the case where the thickness L₄ of the cell wall 23b is less than 0.1 mm, the strength of the cell wall 23b becomes so low that damage such as cracks may happen. On the other hand, in the case where the thickness L₄ of the cell wall 23b exceeds 0. 4 mm, the aperture ratio cannot be maintained at a high level, and as a result, the pressure loss may become too high.

The more desirable lower limit of the thickness L₄ of the cell wall 23b is 0.2 mm and the more desirable upper limit thereof is 0.3 mm.

According to the present invention, a filling body is provided in at least one corner portion of at least one outermost cell of the porous ceramic members, with at least one filled in corner portion being constituted by the outer edge wall.

The cross-sectional shape of the outermost cells at a face orthogonal to the longitudinal direction of the cells is desirably an almost tetragon, although not particularly limited thereto.

Also, the cross-sectional shape of the filling body at the face orthogonal to the longitudinal direction of the cells is desirably an almost right triangle or a shape of an almost right triangle in which the hypotenuse is curved or bent toward the inside or outside of the cell, although not particularly limited thereto.

Inparticular, the right triangle is desirably an isosceles right triangle, because with this shape, the shape of the filling body becomes symmetrical across the corner portion, and the weight balance and the balance of thermal conductivity around the corner portion become excellent, and therefore heat and stress applied to the porous ceramic member can be dispersed efficiently.

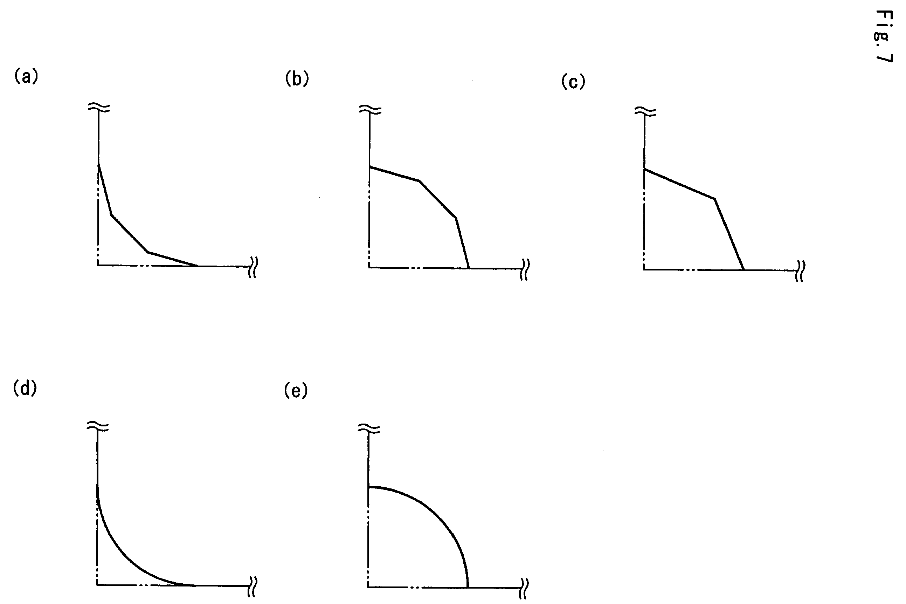

The shape in which the hypotenuse is curved or bent refers to a shape in which a line connecting the two apexes on the two acute angles among the three apexes of a right triangle is smoothly curved as shown in Figs. 7 (d) and 7(e), or a shape in which the two apexes on the two acute angles of a right triangle are connected by a plurality of line segments as shown in Figs. 7 (a) to 7 (c).

According to the present invention, it is satisfactory if the filling body is provided in at least one corner portion of at least one outermost cell of the porous ceramic members, and the number thereof may be any number, provided that it is one or larger. The filling body is provided at a corner portion constituted by the outer edge wall, and at a corner portion constituted by the outer edge wall and the cell wall.

The corner portion constituted by the outer edge wall and the cell wall refers to a corner portion at the bifurcation point of the outer edge wall 23a and the cell wall 23b among corner portions of outermost cells 21a. On the other hand, the corner portion constituted by the outer edge wall refers to, in the porous ceramic member 20 shown in Figs. 2 and 3 for example, among the corner portions of the outermost cells 21a located at the four corners of the porous ceramic member 20, a corner portion which is the closest to the corner portions of the outer edge surface 23 of the porous ceramic member 20, although not limited thereto, and another that is relevant to the above is also included.

Specifically, as shown in Figs. 2 and 3 (a) for example, in a cross-section perpendicular to the longitudinal direction of the porous ceramic member 20, a filling body having a right triangle shape is provided at corner portions of outermost cells 21a having a tetragonal shape, which are separated by the cell walls 23b perpendicularly intersecting with the outer edge walls 23a of the porous ceramic member 20.

Fig. 3 (a) is a front view that shows an enlarged view of only an end face of one example of the porous ceramic member shown in Fig. 2(a), and Fig. 3(b) is a front view that shows an enlarged view of only an end face of one example of a porous ceramic member that is different from the porous ceramic member shown in Fig. 2(a).

According to the present invention, although it is satisfactory if there is at least one outermost cell, which is provided with a filling body that fills in the corner portions, with at least one filled in corner portion being constituted by the outer edge wall the number of such cells is desirably as large as possible, and more desirably all the outermost cells are provided with a filling body that fills in the corner portions.

By providing corner portions of outermost cells 21a with a filling body that fills in the corner portions as mentioned above, strength of the porous ceramic member can be secured, and at the same time the aperture ratio can be secured without reducing the thickness of the cell walls; thus, the pressure loss can be kept at a low level and occurrence of damage such as cracks can be avoided.

In the porous ceramic member shown in Fig. 3(a), corner portions of the outermost cells 21a having a tetragonal shape are provided with filling bodies having a right triangle shape, however, a filling body having a shape of a right triangle in which the hypotenuse is curved or bent toward the inside or outside of the cell may be provided at the other corner portions of the outermost cell 21a.

In the outermost cell 21a, the length (L₂ in Fig. 3(a)) of one side of the filling body having a right triangle shape is desirably 5 to 40% of the length (L₁ in Figs. 3(a)) of one side of the outermost cell 21a.

The length L₂ of less than 5% may not be able to enjoy effects of forming filling bodies, whereas the length L₂ of more than 40% tends to make the outermost cells become too small.

For example, when the length of one side of the outermost cell 21a before providing the filling body is 1.2 mm, the length L₂ of one side of the filling body having a right triangle shape is desirably 0.06 to 0.48 mm.

In Fig. 3(a), outermost cells 21a are provided with a filling body having a right triangle shape, while as shown in Fig. 3(b), outermost cells 31a may be provided with a filling body having a shape of a right triangle in which the hypotenuse is curved or bent toward the inside or outside of the cell. As mentioned above, when the outermost cells 31a are provided with a filling body having a right triangle shape in which the hypotenuse is curved or bent toward the inside or outside of the cell, also the same effects as those in the case of the filling body having a right triangle shape can be obtained. In this case, as in the case where the filling body having a right triangle shape is provided, other corner portions of the outermost cell 31a may be provided with a filling body having a shape of a right triangle in which the hypotenuse is curved or bent toward the inside or outside of the cell. Moreover, in the case where the filling body having a shape of a right triangle in which the hypotenuse of the hypotenuse is curved or bent toward the inside or outside of the cell is provided, the length of one side L₅ of the filling body is desirably 5 to 40% of the length of one side of the outermost cell 31a (c.f. Fig. 3(b)).

Here, in Fig. 3(b), the outer edge wall 33a constitutes the outer edge surface of the porous ceramic member 30, and the cell wall 33b is a cell wall other than the outer edge wall 33a, and the cell 31b is a cell other than the outermost cells. As mentioned above, according to the present invention, the shape of the outermost cells is a cell having a tetragonal shape in which the corner portions are provided with a filling body having an almost right triangle shape, and the like.

According to the present invention, by applying the constitution as mentioned above, the pressure loss can be maintained at a low level, as well as the strength can be secured, and as a result, it is possible to prevent damage such as cracks from occurring. In addition, the occurrence of damage such as chip caused due to grasp by machine in the manufacturing process or contact between the ceramic members and the like can be avoided.

In the porous ceramic member 20, either one end portion of the two end portions of each of the cells 21 is sealed with aplug22; however, in the honeycomb structured body of the present invention, an end portion of each of the cells in the porous ceramic member is not necessarily sealed, and the end portion may be sealed depending on the use of the honeycomb structured body.

Specifically, for example, when the honeycomb structured body of the present invention is used as DPF (Diesel Particulate Filter), an end portion of the cell is desirably sealed, whereas when the honeycomb structured body is used as a catalyst supporting carrier, it is not necessarily sealed at the end portion of the cell.

Moreover, it is satisfactory if the honeycomb structured body of the present invention has at least one porous ceramic member having the above-mentioned characteristics and structure , however, it is more desirable to have a larger number of the porous ceramic member having the above-mentioned characteristics and structure.

The porous ceramic member is mainly made of porous ceramics, and examples of the material include nitride ceramics such as aluminum nitride, silicon nitride, boron nitride and titanium nitride; carbide ceramics such as silicon carbide, zirconium carbide, titanium carbide, tantalum carbide and tungsten carbide; and oxide ceramics such as alumina, zirconia, cordierite, mullite, silica and aluminum titanate, and the like. Here, the porous ceramic member may be formed as a composite body of silicon and silicon carbide. In the case where the composite body of silicon and silicon carbide is used, silicon is desirably added thereto to make up to 0 to 45% by weight of the entire body.

With respect to the material of the porous ceramic member when the porous ceramic member is used as DPF, a silicon carbide based ceramic which is superior in heat resistance and mechanical characteristics, and in addition, has a high thermal conductivity, is desirably used. Here, the silicon carbide based ceramic refers to a material having a silicon carbide content of 60% by weight or more.

Moreover, with respect to the average pore diameter of the porous ceramic member, although not particularly limited, the lower limit value is desirably set to 1 µm, and the upper limit value is desirably set to 50 µm. More desirably, the lower limit value is set to 5 µm, and the upper limit value is set to 30 µm. The average pore diameter of less than 1 µm tends to make the pressure loss become high, whereas the average pore diameter exceeding 50 µm allows PM to easily pass through the pores, so that the PM are not sufficiently captured and the capture efficiency of PM may be deteriorated.

The area of a cross-section perpendicular to the longitudinal direction of the porous ceramic member is not particularly limited, but normally the cross-section with the area of 5 to 50 cm² is desirably used.

The area of less than 5 cm² reduces an effective filtration area as filter, whereas the area exceeding 50 cm² tends to cause damage such as cracks due to thermal stress upon production and in use.

The plug 22 that seals the end portion of the porous ceramic member and the cell wall 23 are desirably made from the same porous ceramic material. With this arrangement, the contact strength between the two members is increased, and moreover, by adjusting the porosity of the plug 22 in the same manner as the cell walls 23, the coefficient of thermal expansion of the cell walls 23 and the coefficient of thermal expansion of the plug 22 are properly adjusted so that it becomes possible to prevent a gap from being generated between the plug 22 and the cell walls 23 due to a thermal stress upon production and in use and also to prevent cracks from occurring in the plug 22 and in portions of the cell walls 23 that are made in contact with the plug 22.

With respect to the length of the plug 22, although not particularly limited, in the case where the plug 22 is made from porous silicon carbide, for example, the lower limit value is desirably set to 1 mm, whereas the upper limit value is desirably set to 20 mm.

The length of the plug of less than 1 mm may not securely seal the end portion of the cells, whereas the length of the plug exceeding 20 mm tends to reduce the effective filtration area of the honeycomb structured body.

More desirably, the lower limit value of the length of the plug is 2 mm and the upper limit value thereof is 10 mm.

In the honeycomb structured body 10, the sealing material layer (adhesive layer) 11 is formed between the porous ceramic members 20, allowing to have a function that prevents leakage of exhaust gases, and also functions as a bonding material used for binding a plurality of the porous ceramic members 20 to one another. On the other hand, the sealing material layer (coat layer) 12, which is formed on the outer peripheral face of the ceramic block 15, is also allowed to function as a plug used for preventing exhaust gases passing through the cells from leaking from the outer peripheral face of the ceramic block 15 when the honeycomb structured body 10 is placed in an exhaust passage of an internal combustion engine, and is also allowed to function as an reinforcing member used for adjusting the external shape of the ceramic block 15 as well as strengthening the outer peripheral portion of the ceramic block 15.

Here, in the honeycomb structured body 10, the adhesive layer 11 and the coat layer 12 may be formed by using the same material, or may be formed by using different materials. In the case where the adhesive layer 11 and the coat layer 12 are made from the same material, the compounding ratio of the materials may be the same or may be different. Moreover, the material may have either a dense structure or a porous structure.

Examples of the material used for forming the adhesive layer 11 and the coat layer 12 include, although not particularly limited, a material made from inorganic fibers and/or inorganic particles in addition to an inorganic binder and an organic binder.

Examples of the above-mentioned inorganic binder include silica sol, alumina sol and the like. Each of these materials may be used alone, or two or more kinds of these may be used in combination. Among the above-mentioned inorganic binders, silica sol is more desirably used.

Examples of the organic binder include polyvinyl alcohol, methyl cellulose, ethyl cellulose, carboxymethyl cellulose and the like. Each of these may be used alone or two or more kinds of these may be used in combination. Among the organic binders, carboxymethyl cellulose is more desirably used.

Examples of the inorganic fibers include ceramic fiber such as alumina, silica, silica-alumina, glass, potassium titanate, aluminum borate, and the like. Examples thereof may further include whiskers made of alumina, silica, zirconia, titania, ceria, mullite, silicon carbide and the like. Each of these may be used alone, or two or more kinds of these may be used in combination. Among the inorganic fibers, alumina fibers are more desirably used.

Examples of the inorganic particles include carbides, nitrides and the like, more specifically, inorganic powder, made from silicon carbide, silicon nitride, boron nitride and the like. Each of these may be used alone, or two or more kinds of these may be used in combination. Among the above-mentioned inorganic particles, silicon carbide, which is superior in thermal conductivity, is more desirably used.

Moreover, balloons that are fine hollow spheres comprising oxide-based ceramics and a pore-forming agent such as spherical acrylic particles or graphite maybe added to the above-mentioned paste used for forming the sealing material layer, if necessary.

Examples of the above-mentionedballoons include, although not particularly limited, alumina balloons, glass micro-balloons, shirasuballoons, flyashballoons (FAballoons), mullite balloons and the like. Among these, alumina balloons are more desirably used.

Moreover, a catalyst may be supported on the honeycomb structured body of the present invention.

In the honeycomb structured body of the present invention, by supporting a catalyst that is capable of converting toxic gas components such as CO, HC, NOx in exhaust gases, it becomes possible to sufficiently convert toxic gas components in exhaust gases through a catalytic reaction. Further, by supporting a catalyst that helps the burning of PM, the PM can be more easily burned and removed. Consequently, the honeycomb structured body of the present invention makes it possible to improve the performance of converting gas components in exhaust gases, and further to reduce the energy for burning the PM.

Examples of the catalyst include a catalyst made of noble metals such as platinum, palladium, rhodium, although not particularly limited thereto. The catalyst may be supported by including an element such as an alkali metal (Group 1 in Element Periodic Table), an alkali earth metal (Group 2 in Element Periodic Table), a rare-earth element (Group 3 in Element Periodic Table) and a transition metal element, in addition to the above-mentioned noble metals.

Moreover, when the above-mentioned catalyst is adhered to the honeycomb structured body, the catalyst may be adhered thereto after the surface has been preliminarily coated with a catalyst supporting layer made of alumina or the like. With this arrangement, the specific surface area is made greater so that the degree of dispersion of the catalyst is improved and the reaction sites of the catalyst are increased. Furthermore, it is possible to prevent sintering of the catalyst metal by the catalyst supporting layer.

Examples of the material for the catalyst supporting layer include oxide ceramics, such as alumina, titania, zirconia and silica.

Here, the honeycomb structuredbody with catalyst supported thereon is allowed to function as a gas purifying (converting) device in the same manner as conventionally known DPFs (Diesel Particulate Filters) with a catalyst. Therefore, with respect to the case where the honeycomb structured body of the present invention is used also as a catalyst supporting carrier, detailed description of the functions thereof is omitted.

Next, the following description will discuss a method for manufacturing the honeycomb structured body.

First, an extrusion-molding process is carried out by using a material paste mainly comprising the above-mentioned ceramic material so that a rectangular pillar-shaped ceramic molded body is manufactured.

With respect to the material paste, although not particularly limited, such paste as to set the porosity of porous ceramic members after production to 45 to 55% is desirably used, and for example, a material paste prepared by adding a binder, a dispersant solution and the like to powder (ceramic powder) containing the above-mentioned ceramics may be used.

With respect to the particle diameter of the ceramic powder, although not particularly limited, those which are less susceptible to shrinkage in the succeeding firing process are desirably used, and for example, those powders, prepared by combining 100 parts by weight of powders having an average particle diameter in the range of about 3 to 70 µm with 5 to 65 parts by weight of powders having an average particle diameter in the range of about 0.1 to 1.0 µm, are preferably used. Here, an oxidizing process may be carried out on the ceramic powder.

Examples of the above-mentioned binder include, although not particularly limited, methyl cellulose, carboxymethyl cellulose, hydroxyethyl cellulose, polyethylene glycol and the like.

In general, the compounding amount of the above-mentioned binder is desirably set to about 1 to 15 parts by weight with respect to 100 parts by weight of the ceramic powder.

Examples of the dispersant solution include, although not particularly limited, an organic solvent such as benzene, alcohol such as methanol, water, and the like.

An appropriate amount of the above-mentioned dispersant solution is mixed therein so that the viscosity of the material paste is set within a fixed range.

The ceramic powder, the binder and dispersant solution are mixed by an attritor or the like, and sufficiently kneaded by a kneader or the like, and then the resulting material paste is extrusion-molded.

Moreover, a molding auxiliary may be added to the material paste, if necessary.

Examples of the molding auxiliary include, although not particularly limited, ethylene glycol, dextrin, fatty acid, fatty acid soap, polyvinyl alcohol and the like.

Furthermore, balloons that are fine hollow spheres comprising oxide-based ceramics and a pore-forming agent such as spherical acrylic particles and graphite may be added to the above-mentioned material paste.

Examples of the above-mentionedballoons include, although not particularly limited, alumina balloons, glass micro-balloons, shirasuballoons, flyashballoons (FAballoons), mullite balloons and the like. Among these, alumina balloons are more desirably used.

In this process, for carrying out extrusion molding, a die is select so as to form a shape in which corner portions of the predetermined cells are provided with the filling body.

Here, the filing body may be provided in the extrusion molding process as mentioned above, and also may be provided separately in a process after extrusion molding, for example, in a process of providing a plug described below; however, it is desirable to provide the filling body in the extrusion molding process, because an excellent productivity can be obtained.

Next, the above-mentioned ceramic molded body is dried by using a drier such as a microwave drier, a hot-air drier, a dielectric drier, a reduced-pressure drier, a vacuum drier and a freeze drier so that a ceramic dried body is formed. Thereafter, a predetermined amount of plug material paste, which forms plugs, is injected into the end portion on the outlet side of the inlet-side group of cells and the end portion on the inlet side of the outlet-side group of cells so that the cells are sealed.

With respect to the plug material paste, although not particularly limited, such paste as to set the porosity of a plug produced through the succeeding processes to 30 to 75% is desirably used, and for example, the same paste as the above-mentioned material paste may be used.

In this process, the length of the plug formed through the succeeding processes can be adjusted by adjusting the amount of paste to be injected.

Next, degreasing (for example, at 200 to 500°C) and firing (for example, at 1400 to 2300°C) under predetermined conditions are carriedout on the ceramic dried body in which the plugmaterial paste is injected so that a porous ceramic member 20 constituted by a single sintered body as a whole, comprising a plurality of cells that are longitudinally placed in parallel with one another through cell walls, in which each of the cells has either one end portion sealed, is manufactured.

Here, with respect to the degreasing and firing conditions of the ceramic dried body, it is possible to apply conditions that have been conventionally used for manufacturing a filter made from porous ceramics.

Next, an adhesive paste to form the adhesive layer 11 is applied to each of the side faces of the porous ceramic member 20 with an even thickness to form an adhesive paste layer, and by repeating a process for successively piling up another porous ceramic member 20 on this adhesive paste layer, a porous ceramic member aggregated body having a predetermined size is manufactured. In order to secure the space between the porous ceramic members 20, there is a method in which a cavity holding member is attached to the surface of the porous ceramic member 20 and a plurality of the porous ceramic members 20 are combined with one another by interposing the cavity holding member so as to manufacture an aggregate body, and then an adhesive material paste is injected into the cavity between the porous ceramic members 20.

With respect to the material for forming the adhesive paste, since it has already been explained, the explanation thereof is omitted.

Next, the porous ceramic member aggregated body is heated so that the adhesive paste layer is dried and solidified to form the adhesive layer 11.

Moreover, by using a diamond cutter and the like, a cutting process is carried out on the porous ceramic member aggregated body in which a plurality of the porous ceramic members 20 are bonded to one another by interposing the adhesive layer 11 so that a ceramic block 15 having a cylindrical shape is manufactured.

By forming a sealing material layer 12 on the outer periphery of the ceramic block 15 by using the sealing material paste, a honeycomb structured body 10 in which the sealing material layer 12 is formed on the outer periphery of the cylindrical ceramic block 15 having a plurality of the porous ceramic members 20 bonded to one another by interposing the adhesive layers 11.

Thereafter, a catalyst is supported on the honeycomb structured body, if necessary. The supporting process of a catalyst may be carried out on the porous ceramic member prior to the manufacturing of the aggregated body.

In the case where a catalyst is supported, desirably, an alumina film having a large specific surface area is formed on the surface of the honeycomb structured body, and a co-catalyst as well as a catalyst such as platinum is adhered to the surface of this alumina film.

With respect to the method for forming the alumina film on the surface of the honeycomb structured body, for example, a method in which the honeycomb structured body is impregnated with a solution of a metal compound containing aluminum such as Al (NO₃)₃ and then heated and a method in which the honeycomb structured body is impregnated with a solution containing alumina powder and then heated can be mentioned.

With respect to the method for adhering the co-catalyst, for example, a method in which the honeycomb structured body is impregnated with a solution of a metal compound containing rare earth element such as Ce (NO₃)₃ and then heated is proposed.

With respect to the method for supporting the catalyst, for example, a method in which the honeycomb structured body is impregnated with, for example, a nitric acid solution of diammine dinitro platinum ([Pt(NH₃)₂(NO₂)₂]HNO₃, platinum concentration: 4.53% by weight) and then heated is proposed.

Moreover, the catalyst may also be supported through a method in which the catalyst is adhered to an alumina particle in advance, to impregnate the honeycomb structured body with a solution containing alumina powder with a catalyst adhered thereto, and heat it thereafter.

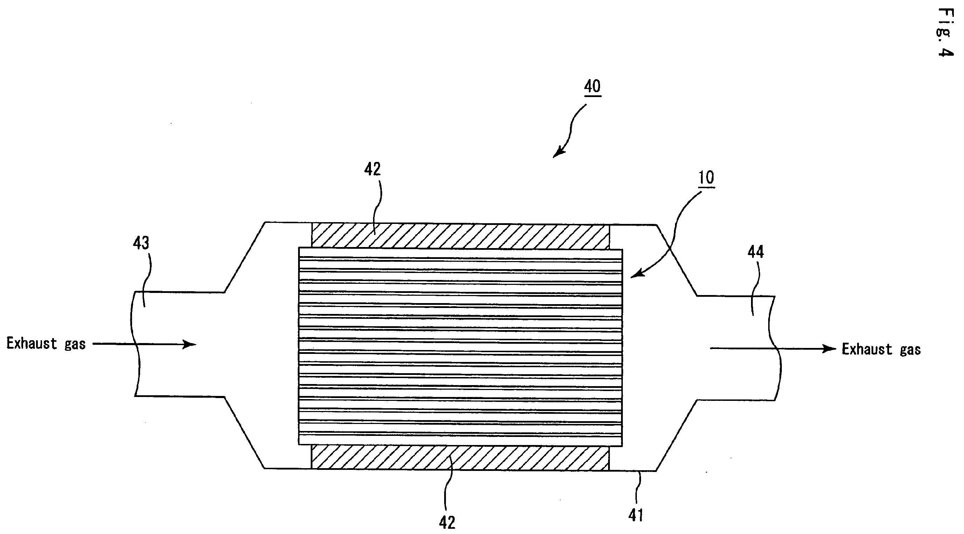

Fig. 4 is a cross-sectional view that schematically shows one example of an exhaust gas purifying device for a vehicle in which the honeycomb structured body of the present invention is installed.

As shown in Fig. 4, an exhaust gas purifying device 40 is mainly constituted by a honeycomb structured body 10, a casing 41 that covers the periphery of the honeycomb structured body 10, and a holding sealing material 42 that is placed between the honeycomb structured body 10 and the casing 41; and connected to one end of the casing 41 on the exhaust gas inlet side is an introducing pipe 43, which is connected to an internal combustion system such as an engine, and connected to the other end of the casing 41 is an exhaust pipe 44 connected to the outside. Moreover, the arrows in Fig. 4 show flows of exhaust gases.

Furthermore, in Fig. 4, the shape of the honeycomb structured body 10 is not particularly limited, and may be cylindrical shape or cylindroid shape. In these cases, however, the casings need to be formed into shapes which fit the shapes of the respective honeycomb structured bodies.

In the exhaust gas purifying device 40 having the above-mentioned configuration, exhaust gases discharged from the internal combustion system such as an engine, are directed into the casing 41 through the introducing pipe 43, and allowed to flow into the honeycomb structured body 10 from inlet-side cells; after having passed through the cell walls where particulates are captured and being purified thereby, the exhaust gases are discharged out of the honeycomb structured body from outlet-side cells, and then discharged to the outside through the exhaust pipe 44.

Moreover, in an exhaust gas filter on which a catalyst for purifying exhaust gases is supported, a toxic component, for example CO, HC, NOx and the like included in exhaust gases are converted to CO₂, H₂O, N₂ and the like, respectively, and discharged outside the bodies.

In the exhaust-gas purifying device 40, after a large quantity of particulates have been accumulated on the cell walls of the honeycomb structured body 10 to cause an increase in pressure loss, a regenerating process is carried out on the honeycomb structured body 10.

In the regenerating process, gases, heated by using a heating means that is not shown herein, are allowed to flow into the honeycomb structured body so that the honeycomb structured body 10 is heated to burn and eliminate the particulates accumulated on the cell walls. Moreover, the particulates may be burned and eliminated by using a post-injection system.

### EXAMPLES

The following description will discuss the present invention in detail by means of examples; however, the present invention is not intended to be limited by these examples.

### (Example 1)

An α-type silicon carbide powder having an average particle diameter of 22 µm (hereinafter referred to as SiC coarse powder) (6000 parts by weight), 2570 parts by weight of an α-type silicon carbide powder having an average particle diameter of 0.5 µm (hereinafter referred to as SiC fine powder), 700 parts by weight of an organic binder (methyl cellulose), 300 parts by weight of a pore forming agent (acrylic resin) having an average particle diameter of 20 µm with pores formed therein, 330 parts by weight of a lubricant (UNILUB, manufactured by NOF Corp.), 150 parts by weight of glycerin, and an appropriate amount of water were blended and evenly mixed to prepare a mixed material composition. This mixed composition was charged into an extrusion molding apparatus, and extrusion molded to manufacture a pillar-shaped raw molded body in which corner portions of cells are provided with a filling body as shown in Fig. 2.

Next, the above-mentioned raw molded bodies were dried by using a microwave dryer or the like to prepare ceramic dried bodies, and predetermined cells were then filled with a plug material paste having the same composition as the composition used for extrusion-molding.

Next, after these had been again dried by using a dryer, the resulting products were degreased at 400°C, and fired at 2200°C in a normal-pressure argon atmosphere for 3 hours to manufacture porous ceramic members 20, each of which comprises a silicon carbide sintered body having a size of 34.3 mm × 34.3 mm × 150 mm, the number of cells 21 (cell density) of 50. 5 pcs/cm², the size of the cell of 1.17 mm × 1.17 mm, a thickness of the cell wall of 0.24 mm, a thickness of the outer edge wall of 0.40 mm, an aperture ratio of 66.4%, and a porosity of 47.5%. Here, the length L₂ of one side of a filling body having a right triangle shape (isosceles right triangle shape) provided at corner portions of a square-shaped cell at a cross-sectionperpendicular to the longitudinal direction of the cells, was set to 10% of the length L₁ (= 1.17 mm) of one side of the cell before the filling body was provided.

Next, by using a heat resistant adhesive paste containing 30% by weight of alumina fibers having an average fiber length of 20 µm, 21% by weight of silicon carbide particles having an average particle diameter of 0.5 µm, 15% by weight of silica sol, 5.6% by weight of carboxymethyl cellulose and 28.4% by weight of water, a number of the porous ceramic members 20 were bonded to one another, and this was further dried at 120°C, and was cut by using a diamond cutter so that a cylindrical ceramic block 15 with an adhesive material layer having a thickness of 1 mm was manufactured.

Next, ceramic fibers made from alumina silicate (shot content: 3%, average fiber length: 100 µm) (23.3% by weight), which served as inorganic fibers, silicon carbide powder having an average particle diameter of 0.3 µm (30.2% by weight), which served as inorganic particles, silica sol (SiO₂ content in the sol: 30% by weight) (7% by weight), which served as an inorganic binder, carboxymethyl cellulose (0.5% by weight), which served as an organic binder, and water (39% by weight) were mixed and kneaded to prepare a sealing material paste.

Next, a sealing material paste layer having a thickness of 0.2 mm was formed on the outer peripheral portion of the ceramic block 15 by using the above-mentioned sealing material paste. Further, this sealing material paste layer was dried at 120°C so that a cylindrical aggregated honeycomb structured body 10 having a size of 143.8 mm in diameter × 150 mm in length was manufactured. Table 2 shows the rate (part by weight) of each material used in the preparation of the above mixed composition.

Tables 1 and 3 show in detail the structures, shapes and dimensions of a porous ceramic member constituting the manufactured honeycomb structured body. In Table 3, (a) to (e) shown in the item of Table 1 mean that porous ceramic members each having the respective structures (a) to (e), which were described in detail in Table 1, were manufactured, and the resulting porous ceramic members were used.

### (Examples 2 to 12)

The same processes as those of Example 1 were carried out to manufacture a honeycomb structured body, except that weight ratio of materials for porous ceramic members, cross-sectional shape of filling bodies, porosity, aperture ratio, thickness of cell walls, thickness of outer edge walls, cell density or ratio of the length of one side of a filling body to the length of one side of a cell before forming the filling body (hereinafter, referred to as ratio of one side of a filling body) was changed as shown in Tables 1 to 3.

Moreover, with respect to the cross-sectional shape of the filling body, the expression "the hypotenuse of a right triangle is curved" means that the cross-sectional shape of the filling body was a shape of a right triangle in which a hypotenuse line connecting the two apexes on the acute angles is smoothly curved, and the hypotenuse is curved toward the direction of the apex on the right angle of the right triangle, i.e., toward the outside of the cell (c.f. Fig. 7(d)).

### (Comparative Examples 1 to 14)

The same processes as those of Example 1 were carried out to manufacture a honeycomb structured body, except that weight ratio of materials for porous ceramic members, structure of the porous ceramic member, cross-sectional shape of filling bodies, porosity, aperture ratio, thickness of cell walls, thickness of outer edge walls, cell density or ratio of one side of a filling body was changed as shown in Tables 1 to 3.

**Table 1**

| Structure of porous ceramic member constituting honeycomb structured body | |
|---|---|
| (a) | Structure in which outer edge walls are made thicker |
| (b) | Structure in which a filling body is provided at a corner portion constituted by a outer edge wall of outermost cells and a corner portion constituted by a outer edge wall and a cell wall |
| (c) | Structure equipped with both the Structure (a) and the Structure (b) |
| (d) | Structure equipped with neither the Structure (a) nor the Structure (b) |
| (e) | Structure in which a filling body is provided at all corner portions of all cells |

**Table 2**

| | SiC coarse powder (part by weight) | SiC fine powder (part by weight) | Organic binder (parts by weight) | Pore forming agent (parts by weight) | Lubricant (parts by weight) | Glycerin (parts by weigh) |
|---|---|---|---|---|---|---|
| Example 1 | 6000 | 2570 | 700 | 300 | 330 | 150 |
| Example 2 | 6000 | 2570 | 700 | 300 | 330 | 150 |
| Example 3 | 6000 | 2570 | 700 | 300 | 330 | 150 |
| Example 4 | 6000 | 2570 | 700 | 300 | 330 | 150 |
| Example 5 | 6290 | 2690 | 700 | 250 | 330 | 150 |
| Example 6 | 5130 | 2200 | 700 | 450 | 330 | 150 |
| Example 7 | 6290 | 2690 | 700 | 250 | 330 | 150 |
| Example 8 | 6000 | 2570 | 700 | 300 | 330 | 150 |
| Example 9 | 5130 | 2200 | 700 | 450 | 330 | 150 |
| Example 10 | 6290 | 2690 | 700 | 250 | 330 | 150 |
| Example 11 | 6000 | 2570 | 700 | 300 | 330 | 150 |
| Example 12 | 5130 | 2200 | 700 | 450 | 330 | 150 |
| Comparative example 1 | 7000 | 3000 | 570 | - | 330 | 150 |
| Comparative example 2 | 6000 | 2570 | 700 | 300 | 330 | 150 |
| Comparative example 3 | 4540 | 1950 | 700 | 550 | 330 | 150 |
| Comparative example 4 | 6000 | 2570 | 700 | 300 | 330 | 150 |
| Comparative example 5 | 6000 | 2570 | 700 | 300 | 330 | 150 |
| Comparative example 6 | 6000 | 2570 | 700 | 300 | 330 | 150 |
| Comparative example 7 | 6000 | 2570 | 700 | 300 | 330 | 150 |
| Comparative example 8 | 6000 | 2570 | 700 | 300 | 330 | 150 |
| Comparative example 9 | 6000 | 2570 | 700 | 300 | 330 | 150 |
| Comparative example 10 | 6000 | 2570 | 700 | 300 | 330 | 150 |
| Comparative example 11 | 6290 | 2690 | 700 | 250 | 330 | 150 |
| Comparative example 12 | 6290 | 2690 | 700 | 250 | 330 | 150 |
| Comparative example 13 | 6290 | 2690 | 700 | 250 | 330 | 150 |
| Comparative example 14 | 6290 | 2690 | 700 | 250 | 330 | 150 |

**Table 3**

| | Table 1 | Cross-sectional shape of filling body | Porosity (%) | Aperture ratio (%) | Cell wall Thickness L₄ (mm) | Outer edge wall Thickness L₃ (mm) | Cell density (pcs/cm²) | Ratio of one side of filling body (%) *1 |
|---|---|---|---|---|---|---|---|---|
| Example 1 | (c) | Right triangle | 47.5 | 66.4 | 0.24 | 0.40 | 50.5 | 10 |
| Example 2 | (c) | Right triangle with curved hypotenuse | 47.5 | 66.4 | 0.24 | 0.40 | 50.5 | 10 |
| Example 3 | (c) | Right triangle | 47.5 | 66.4 | 0.24 | 0.40 | 50.7 | 20 |
| Example 4 | (c) | Right triangle | 47.5 | 66.4 | 0.25 | 0.30 | 49.9 | 10 |
| Example 5 | (c) | Right triangle | 45.0 | 66.4 | 0.24 | 0.40 | 50.5 | 10 |
| Example 6 | (c) | Riqhttrianqle | 55.0 | 66.4 | 0.24 | 0.40 | 50.5 | 10 |
| Example 7 | (c) | Right triangle | 45.0 | 60.0 | 0.30 | 0.40 | 50.4 | 10 |
| Example 8 | (c) | Right triangle | 47.5 | 60.0 | 0.30 | 0.40 | 50.4 | 10 |
| Example 9 | (c) | Right triangle | 55.0 | 60.0 | 0.30 | 0.40 | 50.4 | 10 |
| Example 10 | (c) | Right triangle | 45.0 | 75.0 | 0.20 | 0.30 | 38.4 | 10 |
| Example 11 | (c) | Riqht triangle | 47.5 | 75.0 | 0.20 | 0.30 | 38.4 | 10 |
| Example 12 | (c) | Right triangle | 55.0 | 75.0 | 0.20 | 0.30 | 38.4 | 10 |
| Comparative example 1 | (c) | Right triangle | 42.0 | 66.4 | 0.24 | 0.40 | 50.5 | 10 |
| Comparative example 2 | (c) | Right triangle | 47.5 | 57.0 | 0.33 | 0.40 | 50.4 | 10 |
| Comparative example 3 | (c) | Right triangle | 60.0 | 66.4 | 0.24 | 0.40 | 50.5 | 10 |
| Comparative example 4 | (c) | Right triangle | 47.5 | 78.0 | 0.20 | 0.25 | 28.1 | 10 |
| Comparative example 5 | (a) | -- | 47.5 | 66.4 | 0.24 | 0.40 | 50.5 | -- |
| Comparative example 6 | (b) | Right triangle | 47.5 | 66.4 | 0.25 | 0.25 | 49.8 | 10 |
| Comparative example 7 | (b) | Right triangle with curved hypotenuse | 47.5 | 66.4 | 0.25 | 0.25 | 49.8 | 10 |
| Comparative example 8 | (d) | -- | 47.5 | 66.4 | 0.25 | 0.25 | 49.6 | -- |
| Comparative example 9 | (e) | Right triangle | 47.5 | 66.4 | 0.24 | 0.24 | 49.6 | 10 |
| Comparative example 10 | (e) | Right triangle with curved hypotenuse | 47.5 | 66.4 | 0.24 | 0.24 | 49.6 | 10 |
| Comparative example 11 | (a) | -- | 45.0 | 60.0 | 0.30 | 0.40 | 50.4 | -- |
| Comparative example 12 | (b) | Right triangle | 45.0 | 60.0 | 0.31 | 0.31 | 49.9 | 10 |
| Comparative example 13 | (d) | -- | 45.0 | 60.0 | 0.31 | 0.31 | 49.9 | -- |
| Comparative example 14 | (e) | Right triangle | 45.0 | 60.0 | 0.30 | 0.30 | 49.9 | 10 |

| | | | | | | | | |
|---|---|---|---|---|---|---|---|---|
| Not) *1 Ratio (%) of one side of filling body means L₂/L₁ or L₅/L₁ in the dimensions shown in Figs. 3 (a) and 3(b) | | | | | | | | |

The evaluations (measurement) mentioned below were carried out on the honeycomb structured bodies obtained in Examples 1 to 12 and Comparative Examples 1 to 14.

### (1) Measurement of pressure loss

Each of the porous ceramic members relating to the Examples and the Comparative Examples was connected to a blower, and gas (air flow) was passed therethrough at a flow rate of 13 m/s; thus the pressure loss in the honeycomb structured body was measured. The results are as shown in Table 4.

### (2) Measurement of mechanical characteristics of porous ceramic member by means of iron ball dropping

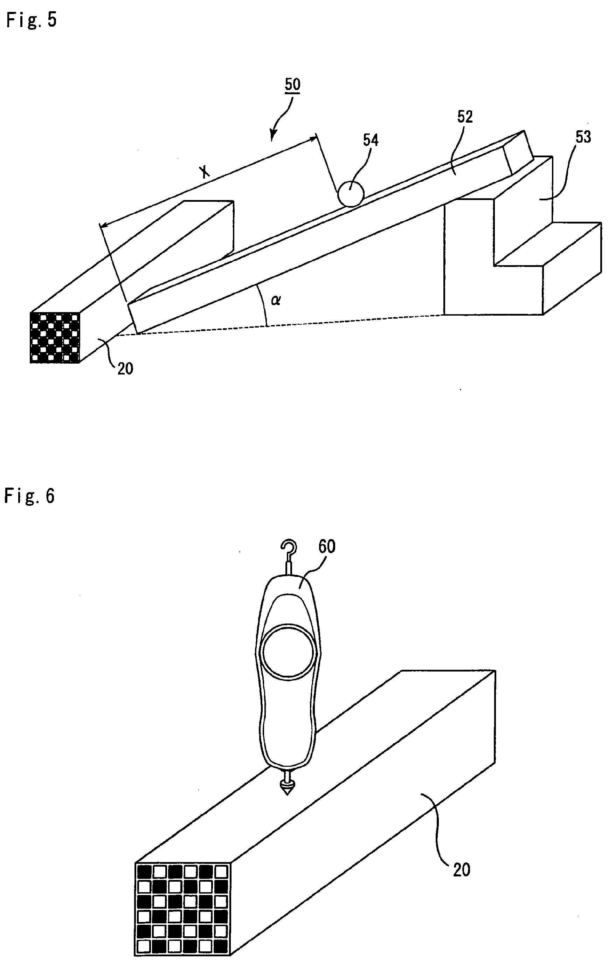

The mechanical characteristics of the porous ceramic members were evaluated by using an iron ball drop impact device as shown in Fig. 5.

In this iron ball drop impact device 50, a board member 52 was propped up against a platform 53 at the angle (indicated as α in Fig. 5) of 10°, and a sample comprising a porous ceramic member was placed in such a manner that the side face (outer peripheral face) thereof came in contact with one side of the board member 52. In this step, the sample was laid out at the position where an iron ball should hit a portion of the outer edge wall corresponding to a cell wall perpendicular to the outer edge wall of the porous ceramic member. Next, the iron ball 54 (weight: 33g) was rolled down from a point 100 mm away from the sample (X=100 mm) on the board member 52 so as to hit the porous ceramic member 20 as a sample, and thereafter an observation was carried out as to whether or not damage occurred in the sample. The number of sample used was 10 pieces, and evaluation was made based on how many of them were damaged. The results were marked with "⊚" , "○" and "×" when the number of damaged samples among the 10 pieces of samples was one or less, 2 to 4, and 5 or more, respectively. The results are as shown in Table 4.

### (3) Measurement of strength of outer edge wall portions of porous ceramic members using a force gauge

As shown in Fig. 6, by using PS10K (manufactured by Imada, Inc.) as a force gauge 60, a cone-shaped tip of the force gauge 60 was pushed onto a outer edge wall portion corresponding to a cell wall perpendicular to the outer edge wall of the porous ceramic member to apply a static pressure thereto, and the pressure at which damage occurred was measured. The results are as shown in Table 4.

**Table 4**

| | Pressure loss (Kpa) | Drop of iron ball | Force gauge (N) |
|---|---|---|---|
| Example 1 | 8.2 | ⊚ | 64.8 |
| Example 2 | 8.2 | ⊚ | 67.2 |
| Example 3 | 8.3 | ⊚ | 71.4 |
| Example 4 | 8.2 | ○ | 61.2 |
| Example 5 | 8.4 | ⊚ | 66.9 |
| Example 6 | 7.7 | ○ | 53.5 |
| Example 7 | 8.5 | ⊚ | 74.4 |
| Example 8 | 8.4 | ⊚ | 72.3 |
| Example 9 | 7.8 | ⊚ | 55.1 |
| Example 10 | 8.2 | ⊚ | 62.2 |
| Example 11 | 8.0 | ⊚ | 59.1 |
| Example 12 | 7.5 | ○ | 50.1 |
| Comparative example 1 | 10.2 | ⊚ | 69.3 |
| Comparative example 2 | 10.0 | ⊚ | 74.9 |
| Comparative example 3 | 7.4 | × | 32.6 |
| Comparative example 4 | 7.9 | × | 57.5 |
| Comparative example 5 | 8.2 | ⊚ | 46.5 |
| Comparative example 6 | 8.2 | × | 64.2 |
| Comparative example 7 | 8.2 | × | 65.1 |
| Comparative example 8 | 8.2 | × | 44.8 |
| Comparative example 9 | 10.3 | × | 62.9 |
| Comparative example 10 | 10.5 | × | 64.1 |
| Comparative example 11 | 8.5 | ⊚ | 48.0 |
| Comparative example 12 | 8.5 | × | 72.5 |
| Comparative example 13 | 8.5 | × | 47.1 |
| Comparative example 14 | 10.7 | × | 71.0 |

As shown in Table 4, the honeycomb structured bodies according to the Examples have a low pressure loss, and tend not to be damaged by dropping of an iron ball (dynamic load). Also, in the measurement using a force gauge (static load), a high pressure was required to cause damage in those honeycomb structured bodies.

On the other hand, the honeycomb structured bodies according to the Comparative Examples have a high pressure loss, or tend to be damaged by dropping of an iron ball, or only a low pressure was required to cause damage therein in the measurement using a force gauge.

The description in the above mainlydiscusses the honeycomb structured body of the present invention, by taking a honeycomb structured body which can be suitably used as a ceramic filter as an example. However, in the honeycomb structured body of the present invention, the honeycomb structured body may be manufactured without being filled with a plug material paste as mentioned above, and the honeycomb structured body in which the end portion of the cells is not sealed with the plug may be suitably used as a catalyst supporting carrier, and such a honeycomb structured body may exert the same effects as those of a honeycomb structured body used as a ceramic filter.

### BRIEF DESCRIPTION OF THE DRAWINGS

Fig. 1 is a perspective view that schematically shows one example of a honeycomb structured body of the present invention.
Fig. 2 (a) is a perspective view that schematically shows one example of a porous ceramic member constituting the honeycomb structured body of the present invention; and Fig. 2(b) is a cross-sectional view taken along line A-A of Fig. 2(a).
Fig. 3 (a) is a front view that shows an enlarged view of an end face of one example of the porous ceramic member shown in Fig. 2 (a), and Fig. 3 (b) is a front view that shows an enlarged view of an end face of one example of a porous ceramic member that is different from the porous ceramic member shown in Fig. 2 (a).
Fig. 4 is a perspective view that schematically shows one example of an exhaust gas purifying device for vehicles in which a honeycomb structured body of the present invention is installed.
Fig. 5 (a) is a perspective view that schematically shows a method for measuring the mechanical characteristics of a porous ceramic member by dropping of an iron ball using an iron ball drop impact device.
Fig. 6 is a perspective view that schematically shows a method for measuring strength of a outer edge wall portion of a porous ceramic member using a force gauge.
Figs.7 (a) to 7(e) each is a cross-sectional view that schematically shows one example of the shape of a corner portion in which a filling body is provided at a corner portion of a cell.

### EXPLANATION OF SYMBOLS

- 10: Honeycomb structured body
- 11: Sealing material layer (adhesive layer)
- 12: Sealing material layer (coat layer)
- 15: Ceramic block

## Claims

1. A honeycomb structured body in which
a plurality of porous ceramic members are combined with one another by interposing an adhesive layer, each of the porous ceramic members having a plurality of cells placed in parallel with one another in a longitudinal direction with a cell wall therebetween and an outer edge wall on the outer edge surface thereof,
the thickness of said outer edge wall of said porous ceramic member being greater than the thickness of said cell wall, wherein
each of said porous ceramic members has a filling body which is provided so as to fill in at least one corner portion of at least one outermost cell of the porous ceramic members, and
said filling body is provided at a corner portion constituted by said outer edge wall, and a corner portion constituted by said outer edge wall and said cell wall.

2. The honeycomb structured body according to claim 1,
wherein
a cross-sectional shape of said outermost cells at the face orthogonal to the longitudinal direction of said cells is an almost tetragon, and
the cross-sectional shape of said filling body at the face orthogonal to the longitudinal direction of said cells is an almost right triangle or a shape of an almost right triangle in which the hypotenuse is curved or bent toward the inside or outside of said cells.

3. The honeycomb structured body according to any of claims 1 to 2,
wherein
the porosity of said porous ceramic members is 45 to 55%, and
the aperture ratio of the cells at the cross-section perpendicular to the longitudinal direction of each of said porous ceramic members is 60 to 75%.

4. The honeycomb structured body according to any of claims 1 to 3,
wherein
either one of the both end portions of each of said cells is sealed.

## Patentansprüche

1. Wabenstrukturkörper, in dem
eine Mehrzahl von porösen Keramikelementen miteinander durch Einfügen einer Klebeschicht kombiniert sind, jedes der porösen Keramikelemente mehrere Zellen, die parallel zueinander in einer Längsrichtung mit einer Zellwand dazwischen angeordnet sind und eine äußere Randwand auf der äußeren Randfläche davon aufweist,
die Dicke der äußeren Randwand des porösen Keramikelements größer ist als die Dicke der Zellwand, wobei
jedes der porösen Keramikelemente einen Füllkörper aufweist, der derart vorgesehen ist, dass er zumindest einen Eckabschnitt zumindest einer äußersten Zelle der porösen Keramikelemente füllt, und
der Füllkörper an einem Eckenabschnitt gebildet durch die äußere Randwand und einem Eckbereich gebildet durch die äußere Randwand und die Zellwand vorgesehen ist.

2. Wabenstrukturkörper nach Anspruch 1, wobei
eine Querschnittsform der äußersten Zellen an der Fläche senkrecht zu der Längsrichtung der Zellen nahezu ein Tetragon ist, und
die Querschnittsform des Füllkörpers an der Fläche senkrecht zu der Längsrichtung der Zellen nahezu ein rechtwinkliges Dreieck ist oder eine Form eines nahezu rechtwinkligen Dreiecks aufweist, in dem die Hypotenuse zum Inneren oder Äußeren der Zellen hin gekrümmt oder gebogen ist.

3. Wabenstrukturkörper nach einem der Ansprüche 1 bis 2, worin
die Porosität der porösen Keramikelemente 45 bis 55 % beträgt, und
das Öffnungsverhältnis der Zellen an dem Querschnitt senkrecht zu der Längsrichtung jedes der porösen Keramikelemente 60 bis 75 % beträgt.

4. Wabenstrukturkörper nach einem der Ansprüche 1 bis 3, worin
einer der beiden Endabschnitte jeder der Zellen abgedichtet ist.

## Revendications

1. Corps structuré en nid d'abeille, dans lequel :
une pluralité d'éléments céramiques poreux sont combinés les uns aux autres en interposant une couche adhésive, chacun des éléments céramiques poreux présentant une pluralité de cellules placées parallèlement les unes aux autres dans la direction longitudinale avec une paroi de cellule entre elles et une paroi d'arête extérieure sur la surface d'arête extérieure de celles-ci,
l'épaisseur de ladite paroi d'arête extérieure dudit élément céramique poreux étant supérieure à l'épaisseur de ladite paroi de cellule, dans lequel :
chacun desdits éléments céramiques poreux comporte un corps de remplissage qui est à même de remplir au moins une partie de coin d'au moins une cellule extérieure des éléments céramiques poreux et
ledit corps de remplissage est prévu sur une partie de coin constituée par ladite paroi d'arête extérieure et une partie de coin constituée par ladite paroi d'arête extérieure et ladite paroi de cellule.

2. Corps structuré en nid d'abeille selon la revendication 1,
dans lequel :
la forme en section transversale desdites cellules extérieures sur la face orthogonale à la direction longitudinale desdites cellules est presque un tétragone et
la forme en section transversale dudit corps de remplissage sur la face orthogonale à la direction longitudinale desdites cellules est un triangle presque droit ou présente la forme d'un triangle presque droit, dans lequel l'hypoténuse est courbée ou pliée vers l'intérieur ou l'extérieur desdites cellules.

3. Corps structuré en nid d'abeille selon l'une quelconque des revendications 1 à 2,
dans lequel :
la porosité desdits éléments céramiques poreux est de 45 à 55 % et
le rapport d'ouverture des cellules sur la section transversale perpendiculaire à la direction longitudinale de chacun desdits éléments céramiques poreux est de 60 à 75 %.

4. Corps structuré en nid d'abeille selon l'une quelconque des revendications 1 à 3,
dans lequel :
l'une ou l'autre des deux parties d'extrémité de chacune desdites cellules est scellée.
